# NEUE EUROPÄISCHE PATENTSCHRIFT

(11) **EP 2 794 325 B2**
(45) Veröffentlichungstag und Bekanntmachung des Hinweises auf die Entscheidung über den Einspruch: **05.08.2020**
(45) Hinweis auf die Patenterteilung: 06.09.2017
(21) Anmeldenummer: 12801530.2
(22) Anmeldetag: 06.12.2012
(51) Int. Cl.: B60K 15/063, B62D 33/00, B62D 59/00

(54) **NUTZFAHRZEUGANHÄNGER FÜR STRASSENFAHRZEUGE, VERWENDUNG EINES FREIRAUMS UNTERHALB EINER LADEFLÄCHE EINES NUTZFAHRZEUGANHÄNGERS, VERFAHREN ZUM BETREIBEN EINES MOTORISIERTEN NUTZFAHRZEUGS UND STRASSENFAHRZEUGGESPANN**
COMMERCIAL VEHICLE TRAILER FOR ROAD VEHICLES, USE OF A CLEARANCE BELOW A LOADING SURFACE OF A COMMERCIAL VEHICLE TRAILER, METHOD FOR OPERATING A MOTORIZED COMMERCIAL VEHICLE, AND ROAD VEHICLE TRAIN
REMORQUE DE VÉHICULE UTILITAIRE POUR VÉHICULES ROUTIERS, UTILISATION D'UN ESPACE LIBRE EN DESSOUS D'UNE SURFACE DE CHARGEMENT D'UNE REMORQUE DE VÉHICULE UTILITAIRE, PROCÉDÉ POUR FAIRE FONCTIONNER UN VÉHICULE UTILITAIRE MOTORISÉ ET TRAIN DE VÉHICULE ROUTIER

(30) Priorität: 22.12.2011 DE 102011056921
(43) Veröffentlichungstag der Anmeldung: 29.10.2014
(73) Patentinhaber: Kögel Trailer GmbH & Co. KG, 89349 Burtenbach (DE)
(72) Erfinder: KREIS, Reinhard, 89356Haldenwang/Konzenberg (DE)
(74) Vertreter: Kilchert, Jochen
(86) Internationale Anmeldenummer: PCT/EP2012/074583
(87) Internationale Veröffentlichungsnummer: WO 2013/092223

(56) Entgegenhaltungen:
- EP-A1- 1 391 599
- EP-A2- 1 145 891
- WO-A1-2010/077187
- DE-A1- 10 108 713
- DE-A1-102008 054 365
- DE-A1-102010 056 179
- DE-U1-202010 008 375
- JP-A- 2011 111 078
- US-A- 5 634 605
- US-A1- 2005 212 281
- US-A1- 2006 027 406
- US-A1- 2011 114 398
- Wikipedia Artikel über Sattelauflieger

## Beschreibung

Die Erfindung betrifft ein Verfahren zum Betreiben eines motorisierten Nutzfahrzeugs für den Straßenverkehr sowie ein Straßenfahrzeuggespann mit einem Zugfahrzeug und einem Nutzfahrzeuganhänger.

In der Praxis stellt sich derzeit das Problem, dass aufgrund der technischen Weiterentwicklungen bei motorisierten Nutzfahrzeugen, insbesondere Sattelzugmaschinen, der Bauraum für Aggregate begrenzt ist. Gleichzeitig erfordern unter anderem gesetzliche Bestimmungen hinsichtlich der Schadstoffreduzierung zusätzliche technische Bauteile zum Betreiben des Sattelzugfahrzeugs. Beispielsweise ist es zur Einhaltung der in Zukunft geltenden Abgasnormen erforderlich, einerseits beispielsweise Tanks für Treibstoffzusatzmittel, beispielsweise Harnstoff, vorzusehen und andererseits die Bauteile im Abgasstrang zu vergrößern. Aufgrund der gesetzlichen vorgegebenen Abgasgrenzwerte bzw. Abgasnormen benötigen motorisierte Nutzfahrzeuge, insbesondere Sattelzugmaschinen, verhältnismäßig größere Abgasanlagen, Kühlanlagen und weitere Zusatzaggregate. Gerade bei Sattelzuggespannen ist zusätzlich die Gesamtlänge gesetzlich begrenzt, so dass das Zugfahrzeug nicht beliebig vergrößert werden kann, ohne das Nutzlastvolumen des Sattelzugespanns zu reduzieren. Solche Fahrzeuge sind von EP 1391599 sowie WO 2010 077187 bekannt.

Aus dem Vorgenannten ergibt sich die Aufgabe der Erfindung, eine Möglichkeit zu schaffen, die Effizienz von motorisierten Zugfahrzeugen im Hinblick auf die Umweltfreundlichkeit zu erhöhen, ohne das zur Verfügung stehende Nutzlastvolumen des gesamten Straßenfahrzeuggespanns aus Zugfahrzeug und Nutzfahrzeuganhänger zu reduzieren.

Erfindungsgemäß wird diese Aufgabe durch ein Straßenfahrzeuggespann gemäß Patentanspruch 1 sowie durch ein Verfahren zum Betreiben eines motorisierten Zugfahrzeugs gemäß Patentanspruch 8.

Die Erfindung beruht auf dem Gedanken, einen Nutzfahrzeuganhänger für Straßenfahrzeuge mit einem Fahrgestell und mit einem Fahrzeugrahmen anzugeben, der mit dem Fahrgestell verbunden ist und eine Ladefläche trägt, wobei der Fahrzeugrahmen unterhalb der Ladefläche wenigstens eine Versorgungs- und/oder Speichereinrichtung aufweist, die mit dem Zugfahrzeug verbindbar ist, um Energie und/oder Betriebsmittel wenigstens einem Aggregat des Zugfahrzeugs zuzuführen.

Insbesondere baut die Erfindung auf der Idee auf, einen Freiraum unterhalb einer Ladefläche eines Nutzfahrzeuganhängers für Straßenfahrzeuge zur Anbringung einer Versorgungs- und/oder Speichereinrichtung zu verwenden, die Energie und/oder Betriebsmittel für ein Aggregat eines mit dem Nutzfahrzeuganhänger gekoppelten Zugfahrzeugs bereitstellt.

Ein nebengeordneter Aspekt der Erfindung betrifft ein Verfahren zum Betreiben eines motorisierten Zugfahrzeugs für den Straßenverkehr, bei dem wenigstens einem Aggregat des Zugfahrzeugs Energie und/oder Betriebsmittel aus einer Versorgungs- und/oder Speichereinrichtung zugeleitet wird, die unter einer Ladefläche an einem Fahrzeugrahmen eines mit dem Zugfahrzeug gekoppelten Nutzfahrzeuganhängers angebracht ist.

Erfindungsgemäß wird ein Straßenfahrzeuggespann mit einem motorisierten Zugfahrzeug und einem Nutzfahrzeuganhänger beansprucht, wobei wenigstens eine für den Betrieb eines Aggregats des Zugfahrzeugs genutzte Versorgungs- und/oder Speichereinrichtung an einem Fahrzeugrahmen des Nutzfahrzeuganhängers unterhalb der Ladefläche angebracht und mit dem Aggregat des Zugfahrzeugs verbunden ist.

Der den vorliegend beschriebenen, nebengeordneten Aspekten der Erfindung zugrunde liegende gemeinsame Kerngedanke besteht darin, die für den Betrieb eines motorisierten Zugfahrzeugs erforderlichen Versorgungs- und/oder Speichereinrichtungen zumindest teilweise in den Nutzfahrzeuganhänger zu verlegen. Es hat sich gezeigt, dass am Nutzfahrzeuganhänger, insbesondere unterhalb der Ladefläche, Freiräume bestehen, die nicht durch für die Funktion des Nutzfahrzeuganhängers erforderliche Aggregate oder sonstige technische Einrichtungen belegt sind. Mit anderen Worten findet sich also unter der Ladefläche des Nutzfahrzeuganhängers ausreichend Platz, um Bauteile, die an sich dem Zugfahrzeug zugeordnet sind, im Nutzfahrzeuganhänger unterzubringen, und somit Bauraum im Zugfahrzeug selbst einzusparen.

Bei bestehenden Nutzfahrzeuganhängern, insbesondere Sattelanhängern, liegen mehrere Möglichkeiten vor, die Versorgungs- und/oder Speichereinrichtung unterzubringen. Beispielsweise besteht zwischen den Längsträgern des Fahrzeugrahmens ein Freiraum, in welchem die Versorgungs- und /oder Speichereinrichtung angeordnet sein kann. Die Versorgungs- und/oder Speichereinrichtung kann auch zwischen dem Fahrgestell und einer Anhängerkupplung angeordnet sein. Vorzügsweise ist die Versorgungs- und/oder Speichereinrichtung zwischen dem Fahrgestell und einem Schwanenhals angeordnet, der eine Sattelkupplung umfasst. Konkret kann die Versorgungs- und/oder Speichereinrichtung zwischen dem Fahrgestell und einer Aufliegerstütze angeordnet sein.

Die Anordnung der Versorgungs- und/oder Speichereinrichtung in diesen Bereichen des Fahrzeugrahmens ist besonders vorteilhaft, da diese Bereiche bei bisherigen Nutzfahrzeuganhängern, insbesondere Sattelanhängern, frei von für die Funktion des Nutzfahrzeuganhängers relevanten Anbauteilen sind.

Die Versorgungs- und/oder Speichereinrichtung kann beispielsweise einen Tank für flüssigen oder gasförmigen Kraftstoff aufweisen. Konkret kann vorgesehen sein, dass unter dem Ladeboden des Nutzfahrzeuganhängers wenigstens ein Tank für Kraftstoff mit dem Fahrzeugrahmen verbunden ist. Der Kraftstofftank kann über eine Leitung mit dem Zugfahrzeug verbunden werden, um den Kraftstoff an ein Aggregat, insbesondere den Motor, des Zugfahrzeugs zu leiten. Auf diese Weise kann der Tank im Zugfahrzeug selbst verkleinert und somit Bauraum eingespart werden.

Überdies ist denkbar, dass die Versorgungs- und/oder Speichereinrichtung einen Tank für gasförmigen Kraftstoff aufweist. Dies ist aus ökologischen Gesichtspunkten insofern interessant, als dass diese Variante die Möglichkeit bietet, Nutzfahrzeuggespanne mit Erdgas als Betriebsmittel bzw. Kraftstoff für den Motor des Zugfahrzeugs zu betreiben. Da der Freiraum unter der Ladefläche des Nutzfahrzeuganhängers ausreichend Platz zur Unterbringung eines derartigen Tanks für gasförmigen Kraftstoff bietet, kann das Zugfahrzeug einerseits umweltfreundlich mit Erdgas betrieben werden. Andererseits wird durch die Auslagerung des Tanks vom Zugfahrzeug in den Nutzfahrzeuganhänger die Möglichkeit geschaffen, ein größeres Tankvolumen mitzuführen, so dass die Reichweite des gesamten Straßenfahrzeuggespanns für gängige Fahrten ausreicht bzw. nicht signifikant hinter der Reichweite vergleichbarer benzin- oder dieselbetriebener Straßenfahrzeuggespanne zurückbleibt.

Die Versorgungs- und/oder Speichereinrichtung kann auch einen Speicher für elektrische Energie, insbesondere einen Akkumulator, aufweisen. Der Speicher für elektrische Energie bzw. der elektrische Speicher kann beispielsweise Energie für einen Hybridantrieb des Zugfahrzeugs bereitstellen. Ferner kann die elektrische Energie, die in der Speichereinrichtung im Nutzfahrzeuganhänger gespeichert ist, für andere elektrisch betriebene Aggregate des Zugfahrzeugs, beispielsweise einer Klimaanlage, genutzt werden.

Vorzugsweise ist die Versorgungs- und/oder Speichereinrichtung in einem Staukasten, insbesondere Palettenstaukasten angeordnet, der mit dem Fahrzeugrahmen fest verbunden ist. Die Anordnung in einem Staukasten ist insbesondere bei einer Versorgungs- und/oder Speichereinrichtung vorteilhaft, die als Tank für flüssigen oder gasförmigen Kraftstoff ausgebildet ist. Der Staukasten bildet dabei ein Schutzgehäuse, so dass die Versorgungs- und/oder Speichereinrichtung vor Beschädigungen geschützt ist, die beispielsweise infolge eines Verkehrsunfalls auftreten können. Überdies ermöglicht der Staukasten eine vereinfachte Wartung, insbesondere einen vereinfachten Austausch der Versorgungs- und/oder Speichereinrichtung. Dazu kann insbesondere vorteilhaft vorgesehen sein, dass der Staukasten einen schubladenähnlichen Auszug aufweist, auf dem die Versorgungs- und/oder Speichereinrichtung angeordnet ist. Auf diese Weise wird die Versorgungs- und/oder Speichereinrichtung leicht zugänglich. Die Wartungsfreundlichkeit erhöht sich dadurch.

Bei der Erfindung ist die Versorgungs- und/oder Speichereinrichtung des Nutzfahrzeuganhängers modular ausgebildet und weist eine Befestigungsvorrichtung auf, die mit dem Fahrzeugrahmen verbunden und zur Aufnahme unterschiedlicher Versorgungs- und/oder Speicherelemente ausgebildet ist. Der modulare Aufbau hat insbesondere bei der Fertigung neuer Nutzfahrzeuganhänger, aber auch bei der Nachrüstung bestehender Nutzfahrzeuganhänger, erhebliche Vorteile. Erfindungsgemäß sind neue Nutzfahrzeuganhänger werkseitig bereits mit der Befestigungsvorrichtung vorgerüstet. Bei Bedarf kann dann ein Modul mit einem Versorgungs- und/oder Speicherelement durch die Befestigungsvorrichtung mit dem Fahrzeugrahmen verbunden werden. Auf diese Weise können einzelne Versorgungs- und/oder Speicherelemente einerseits schnell ausgewechselt und andererseits durch alternative Versorgungs- und/oder Speicherelemente ausgetauscht werden. Durch die bereits werkseitig am Fahrzeugrahmen fixierte Befestigungsvorrichtung wird auch die Möglichkeit geschaffen, den Nutzfahrzeuganhänger jederzeit mit einem Versorgungs- und/oder Speicherelement nachzurüsten. Durch eine definierte bzw. standardisierte Schnittstelle zwischen der Befestigungsvorrichtung und dem Versorgungs- und/oder Speicherelement werden die Montagezeiten reduziert. Somit kann mit relativ wenig Aufwand Kundenwünschen entsprochen werden.

Der Nutzfahrzeuganhänger ist vorzugsweise als Sattelanhänger ausgebildet. Bei Sattelanhängern kommen die vorgenannten Wirkungen und Vorteile besonders deutlich zum Tragen, da die äußeren Abmessungen von Sattelzuggespannen gesetzlich begrenzt sind. Gleichzeitig ist es wünschenswert, ein möglichst großes Nutzlastvolumen bzw. Ladevolumen beizubehalten. Die Auslagerung von Bauteilen des Zugfahrzeugs in den Nutzfahrzeuganhänger verhindert, dass das Zugfahrzeug insgesamt an Größe zunimmt, was zu Lasten des verfügbaren Ladevolumens im Gesamtgespann führen würde.

Die Erfindung wird im Folgenden anhand von Ausführungsbeispielen unter Bezugnahme auf die beigefügten, schematischen Zeichnungen näher erläutert. Darin zeigen
Fig. 1 eine Seitenansicht eines Nutzfahrzeuganhängers eines Straßenfahrzeuggespanns nach einem erfindungsgemäßen Ausführungsbeispiel;
Fig. 2 eine perspektivische Ansicht eines Nutzfahrzeuganhängers eines Straßenfahrzeuggespanns nach einem weiteren, erfindungsgemäßen Ausführungsbeispiel;
Fig. 3 eine perspektivische Ansicht der Unterseite des Nutzfahrzeuganhängers gemäß Fig. 2;
Fig. 4 eine Seitenansicht des Nutzfahrzeuganhängers gemäß Fig. 2;
Fig. 5 eine Unteransicht des Nutzfahrzeuganhängers gemäß Fig. 2;
Fig. 6 eine Querschnittsansicht durch einen Fahrzeugrahmen des Nutzfahrzeuganhängers entlang der Linie A-A gemäß Fig. 2; und
Fig. 7 eine Vorderansicht des Fahrzeugrahmens gemäß Fig. 6.

Der in den Figuren gezeigte Nutzfahrzeuganhänger 1 ist als Sattelanhänger bzw. Sattelauflieger ausgebildet. Der Nutzfahrzeuganhänger 1 weist ein Fahrgestell 2 auf, das mit einem Fahrzeugrahmen 3 fest verbunden ist. Der Fahrzeugrahmen 3 trägt einen Aufbau 4 mit einer in den Figuren nicht erkennbaren Ladefläche.

Der Fahrzeugrahmen 3 umfasst zwei Längsträger 12, die in Fahrtrichtung des Nutzfahrzeuganhängers 1 parallel zueinander angeordnet sind. Die Längsträger 12 erstrecken sich also in Längsrichtung des Nutzfahrzeuganhängers 1 und weisen zueinander einen Abstand auf. Zwischen den Längsträgern 12 ist somit ein Freiraum gebildet. Dieser Freiraum ist geeignet, um eine Versorgungs- und/oder Speichereinrichtung 6 aufzunehmen. Auf die Versorgungs- und/oder Speichereinrichtung 6 wird später näher eingegangen.

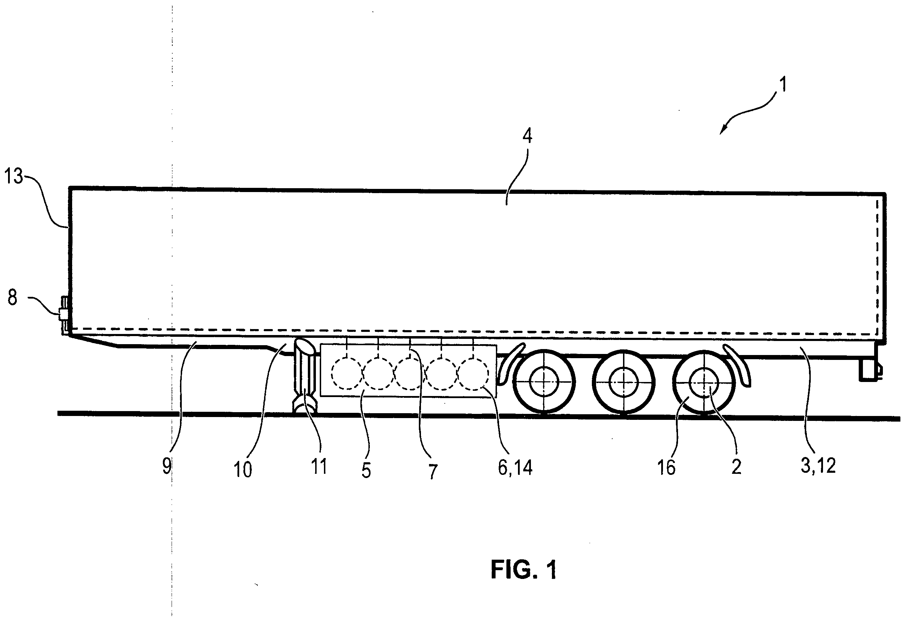

Der Fahrzeugrahmen 3 weist ferner im vorderen Bereich des Nutzfahrzeuganhängers 1 einen Schwanenhals 9 auf. Der Schwanenhals 9 erstreckt sich von einer Vorderwand 13 des Nutzfahrzeuganhängers 1 bis zu einer Kröpfung 10, die im Bereich der Aufliegerstützen 11 angeordnet ist. Im Schwanenhalsbereich 9 ist ein Königszapfen 20 angeordnet, der zur Verbindung mit einer Sattelkupplung eines Zugfahrzeugs geeignet ist. Der Königszapfen 20 ist aus Gründen der Übersichtlichkeit in Fig. 1 nicht dargestellt.

Im Bereich der Vorderwand 13 ist ferner ein Anschlusspaneel 8 vorgesehen, das elektrische Anschlüsse und Fluidanschlüsse zur Verbindung des Nutzfahrzeuganhängers 1 mit einer Zugmaschine aufweist. Die Fluidanschlüsse umfassen beispielsweise Druckluftleitungen für die Bremsen am Fahrgestell 2 des Nutzfahrzeuganhängers 1. Ferner sind im Anschlusspaneel 8 elektrische Verbindungen angeordnet, um die Beleuchtungseinrichtung des Nutzfahrzeuganhängers 1 mit einer Energieversorgung des Zugfahrzeugs zu koppeln bzw. die Beleuchtungseinrichtung des Nutzfahrzeuganhängers 1 von der Zugmaschine ausgehend steuern zu können.

Wie in Fig. 1 gut erkennbar ist, ist zwischen dem Schwanenhals 9, insbesondere der Kröpfung 10 bzw. der Aufliegerstütze 11 und dem Fahrgestell 2 des Nutzfahrzeuganhängers 1 unterhalb der Ladefläche bzw. des Aufbaus 4 ein Freiraum, der für die Funktionsweise des Nutzfahrzeuganhängers 1 ungenutzt bleiben kann. Dieser Freiraum eignet sich dazu, eine Versorgungs- und/oder Speichereinrichtung 6 unter dem Fahrzeugrahmen 3 aufzunehmen. Bei dem dargestellten Ausführungsbeispiel ist die Speichereinrichtung 6 aus mehreren Gastanks 14 gebildet, die in einem Staukasten angeordnet sind. Der Staukasten ist seitlich des Längsträgers 12 unterhalb der Ladefläche mit dem Fahrzeugrahmen 3 fest verbunden. Eine Versorgungsleitung 7 verbindet die Gastanks 14 mit dem Anschlusspaneel 8. Am Anschlusspaneel 8 ist ein Gasanschluss 15 angebracht, der die Verbindung zu einem Zugfahrzeug ermöglicht.

Bei dem in den Figuren dargestellten Ausführungsbeispielen ist vorgesehen, dass die Gastanks 14 zur Aufnahme von Erdgas geeignet sind. Die Gastanks 14 sind daher als Druckgasbehälter ausgeführt. Das Erdgas in den Gastanks 14 dient als Treibstoff für den Motor des Zugfahrzeugs. Auf diese Weise kann ein umweltfreundliches Straßenfahrzeuggespann verwirklicht werden, da die Gastanks 14, die einen relativ großen Bauraum einnehmen, am Nutzfahrzeuganhänger 1 angebracht sind. Somit wird vermieden, dass sich die Abmessungen des Zugfahrzeugs selbst erhöhen, was erforderlich wäre, wenn die gleiche Gasmenge am Zugfahrzeug direkt mitgeführt werden sollte. Zwar ist nicht ausgeschlossen, dass das Zugfahrzeug selbst einen eigenen Gastank aufweist. Durch die am Nutzfahrzeuganhänger 1 mitgeführten Gastanks 14 wird allerdings signifikant die Reichweite des Straßenfahrzeuggespanns, das die Zugmaschine mit dem Nutzfahrzeuganhänger 1 bzw. Sattelauflieger gemäß einem der in den Figuren dargestellten Ausführungsbeispiele umfasst, erhöht. Der Staukasten 5 gemäß Figur 1 entspricht im Wesentlichen einem üblichen Palettenstaukasten, wobei eine ausziehbare Montageplatte vorgesehen ist, auf der die Gastanks 14 befestigt sind. Die Montageplatte ist somit seitlich aus dem Staukasten 5 herausschiebbar, so dass die Gastanks 14 leicht zugänglich sind.

Im Allgemeinen können die Gastanks 14 bzw. die Speichereinrichtung 6 auch an anderen Orten unterhalb der Ladefläche des Nutzfahrzeuganhängers 1 angeordnet sein. Der Bereich für die Anordnung einer Versorgungs- und/oder Speichereinrichtung 6 ist zwischen den Längsträgern 12. Auf diese Weise wird die Versorgungs- und/oder Speichereinrichtung in einem relativ zentralen Bereich des Nutzfahrzeuganhängers befestigt, wodurch eine Beschädigung im Crashfall vermieden wird.

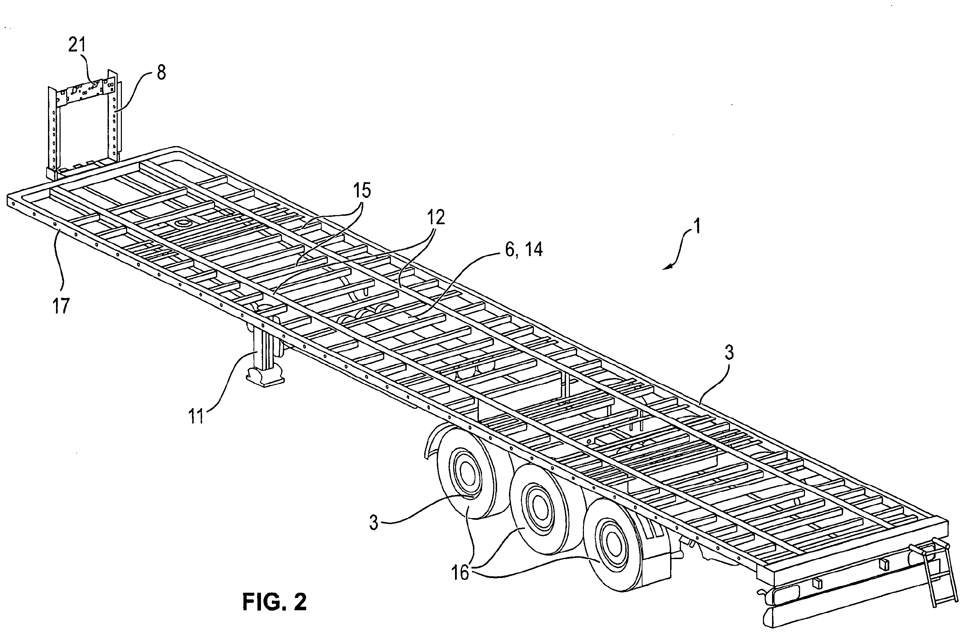

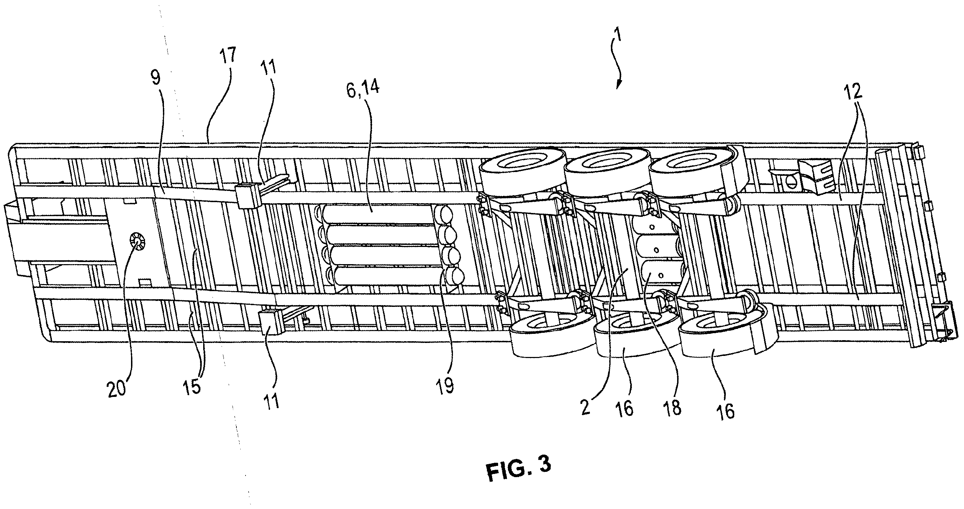

Die Anbringung der Speichereinrichtung 6 zwischen den Längsträgern 12 des Nutzfahrzeuganhängers 1 ist in den Figuren 2 bis 7 im Rahmen eines weiteren Ausführungsbeispiels dargestellt. Um die Rahmenkonstruktion des Fahrzeugrahmens 3 zu zeigen, ist die Ladefläche in den Figuren 2 bis 7 nicht dargestellt. Diese liegt tatsächlich direkt auf dem Fahrzeugrahmen 3 auf.

Der Fahrzeugrahmen 3 des Nutzfahrzeuganhängers 1 weist zwei Längsträger 12 auf, die Querträger 15 tragen. An den Längsträgern 12 ist das Fahrgestell 2 befestigt, das ein oder mehrere Achsen für Räder 16 umfasst. Die Querträger 15 verbinden einerseits die beiden Längsträger 12 und erstrecken sich andererseits zwischen den Längsträgern 12 und einem Lochaußenrahmen 17 des Fahrzeugrahmens 3.

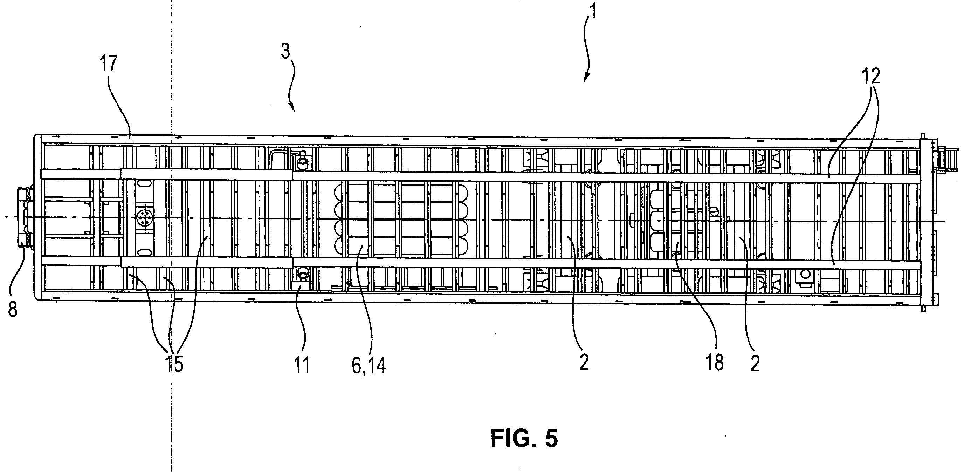

In der Draufsicht gemäß Fig. 5 ist erkennbar, dass zwischen den Längsträgern 12 des Fahrzeugrahmens 3 Aggregate des Fahrgestells 2 auf Höhe der Räder 16 angeordnet sind. Insbesondere sind Drucklufttanks 18 erkennbar, die ausschließlich dem Nutzfahrzeuganhänger 1 zugeordnet sind, also für das Bremsaggregat des Nutzfahrzeuganhängers 1 die erforderliche Druckluft zur Verfügung stellen.

Im Bereich zwischen dem Fahrgestell 2 und der Aufliegerstütze 11 ist zwischen den Längsträgern 12 eines herkömmlichen Nutzfahrzeuganhängers 1 ein Freiraum, der bei dem Nutzfahrzeuganhänger zur Aufnahme von einer Speichereinrichtung 6 genutzt wird. Die Speichereinrichtung 6 ist im Unterschied zu den Aggregaten des Fahrgestells 2 einem Zugfahrzeug zugeordnet, das mit dem Nutzfahrzeuganhänger 1 verbindbar ist. Bei dem hier dargestellten Ausführungsbeispiel ist die Speichereinrichtung 6 als Gastankmodul ausgebildet, das mehrere Gastanks 14 umfasst. Die Gastanks 14 sind über eine Versorgungsleitung 7 mit dem Zugfahrzeug verbindbar, so dass das in den Gastanks 14 gelagerte Gas beispielsweise zum Betrieb des Zugfahrzeugs genutzt werden kann. Vorzugsweise sind die Gastanks 14 analog zum Ausführungsbeispiel gemäß Fig. 1 als Druckgasbehälter zur Aufnahme von Erdgas ausgebildet. Das Erdgas wird als Kraftstoff für das Zugfahrzeug des Nutzfahrzeuganhängers 1 genutzt. Andere Arten der Speichereinrichtung 6 sind denkbar. Beispielsweise kann die Speichereinrichtung 6 als Akkumulatormodul ausgebildet sein, so dass elektrische Energie, die zum Beispiel für einen Hybridantrieb eines Zugfahrzeugs genutzt wird, vom Nutzfahrzeuganhänger 1 bereitgestellt wird.

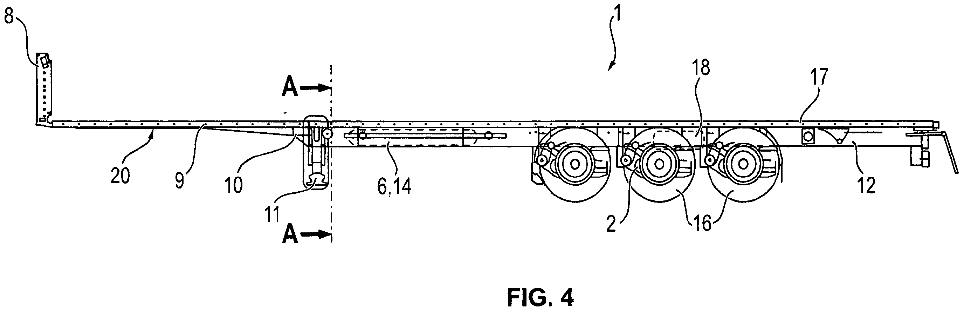

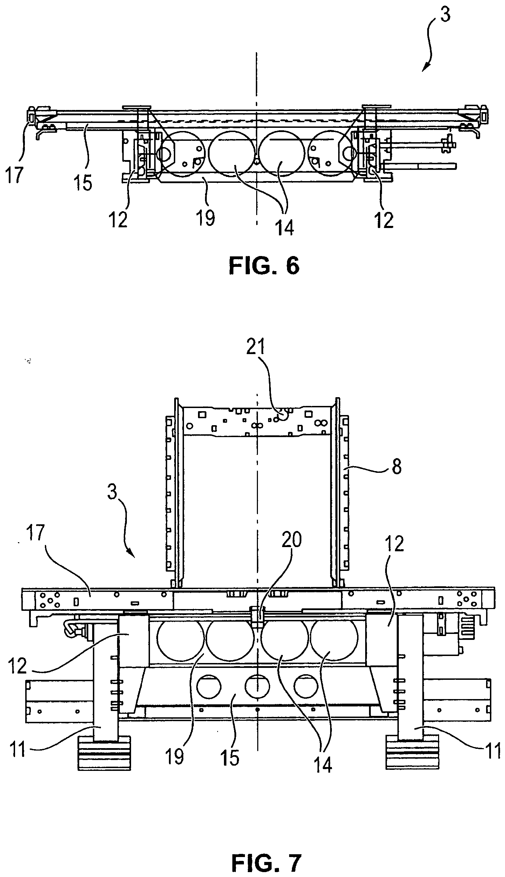

Fig. 4 zeigt eine Seitenansicht des Nutzfahrzeuganhängers 1, wobei durch eine gestrichelte Linie die Lage der Gastanks 14 zwischen den Längsträgern 12 angedeutet ist. Es ist gut erkennbar, dass die Gastanks 14 derart ausgebildet sind, dass diese vollständig zwischen die Längsträger 12 eingebettet sind. Insbesondere weisen die Gastanks 14 eine Höhe bzw. einen Durchmesser auf, der höchstens der Höhe der Längsträger 12 entspricht. Somit sind die Gastanks 14 vollständig hinter den Längsträgern 12 verdeckt. Zusätzlich zu der mittigen Anordnung im Nutzfahrzeuganhänger 1 wird dadurch die Beschädigung der Gastanks 14 bzw. allgemein der Speichereinrichtung 6 im Crashfall vermieden. Aus Fig. 2 ist außerdem erkennbar, dass die Gastanks 14 unter den Querträgern 15 des Fahrzeugrahmens 3 angeordnet sind. Insbesondere sind die Gastanks 14 über eine Halteplatte 19 fest mit den Querträgern 15 verbunden. Die mittig im Fahrzeugrahmen 3 bzw. zwischen den Längsträgern 12 gewählte Anordnung ist außerdem aus den Figuren 6 und 7 ersichtlich. In Fig. 7 ist zusätzlich das Anschlusspaneel 8 erkennbar, das Ausnehmungen 21 zur Aufnahme von Anschlüssen aufweist. Die Anschlüsse dienen zur Verbindung der Bremseinrichtung und der Beleuchtungseinrichtung des Nutzfahrzeuganhängers 1 mit dem Zugfahrzeug. Zusätzlich ist wenigstens ein Anschluss vorgesehen, der zur Verbindung der Speichereinrichtung 6 mit dem Zugfahrzeug geeignet ist, um in der Speichereinrichtung 6 gespeicherte Energie oder Betriebsmittel dem Zugfahrzeug zuzuführen.

Die Versorgungs- und/oder Speichereinrichtung 6 kann unterschiedliche Formen aufweisen. Beispielsweise kann die Versorgungs- und/oder Speichereinrichtung, insbesondere der Tank, zylinderförmig ausgebildet sein, oder an die Form des zu füllenden Freiraums unter der Ladefläche des Nutzfahrzeuganhängers 1 angepasst sein. Die als Speichereinrichtung 6 dienenden Tanks können beispielsweise für den Transport oder die Lagerung von Diesel, Gas bzw. allgemein Treibstoffen in flüssigem oder gasförmigem Aggregatszustand ausgelegt sein.

### Bezugszeichenliste

- 1: Nutzfahrzeuganhänger
- 2: Fahrgestell
- 3: Fahrzeugrahmen
- 4: Aufbau
- 5: Staukasten
- 6: Speichereinrichtung
- 7: Versorgungsleitung
- 8: Anschlusspaneel
- 9: Schwanenhals
- 10: Kröpfung
- 11: Aufliegerstütze
- 12: Längsträger
- 13: Vorderwand
- 14: Gastank
- 15: Querträger
- 16: Rad
- 17: Lochaußenrahmen
- 18: Drucklufttank
- 19: Halteplatte
- 20: Königszapfen
- 21: Ausnehmung

## Patentansprüche

1. Straßenfahrzeuggespann mit einem motorisierten Zugfahrzeug und einem Nutzfahrzeuganhänger (1) mit einem Fahrgestell (2) und mit einem Fahrzeugrahmen (3), der mit dem Fahrgestell (2) verbunden ist und eine Ladefläche trägt, wobei
- der Fahrzeugrahmen (3) unterhalb der Ladefläche wenigstens eine Versorgungs- und/oder Speichereinrichtung (6) aufweist, die mit einem Zugfahrzeug verbindbar ist, um Energie und/oder Betriebsmittel wenigstens einem Aggregat des Zugfahrzeugs zuzuführen, wobei
- die Versorgungs- und/oder Speichereinrichtung (6) modular ausgebildet ist und eine werkseitig am Fahrzeugrahmen (3) fixierte Befestigungsvorrichtung aufweist, die zur Aufnahme unterschiedlicher Versorgungs- und/oder Speicherelemente ausgebildet ist, wobei
- die Versorgungs- und/oder Speichereinrichtung (6) zwischen zwei Längsträgern (12) des Fahrzeugrahmens (3) angeordnet ist, wobei
- zur Verbindung der Versorgungs- und/oder Speicherelemente eine standardisierte Schnittstelle vorgesehen ist, und wobei
wenigstens die für den Betrieb eines Aggregats des Zugfahrzeugs genutzte Versorgungs- und/oder Speichereinrichtung (6) an einem Fahrzeugrahmen (3) des Nutzfahrzeuganhängers (1) unterhalb der Ladefläche angebracht und mit dem Aggregat des Zugfahrzeugs verbunden ist.

2. Nutzfahrzeuganhänger (1) nach Anspruch 1,
**dadurch gekennzeichnet, dass**
die Versorgungs- und/oder Speichereinrichtung (6) zwischen dem Fahrgestell (2) und einer Anhängerkupplung angeordnet ist.

3. Nutzfahrzeuganhänger (1) nach Anspruch 1 oder 2,
**dadurch gekennzeichnet, dass**
die Versorgungs- und/oder Speichereinrichtung (6) zwischen dem Fahrgestell (2) und einem Schwanenhals (9) angeordnet ist, der eine Sattelkupplung umfasst.

4. Nutzfahrzeuganhänger (1) nach einem der vorhergehenden Ansprüche,
**dadurch gekennzeichnet, dass**
die Versorgungs- und/oder Speichereinrichtung (6) einen Tank (14) für flüssigen oder gasförmigen Kraftstoff aufweist.

5. Nutzfahrzeuganhänger (1) nach einem der vorhergehenden Ansprüche,
**dadurch gekennzeichnet, dass**
die Versorgungs- und/oder Speichereinrichtung (6) einen Speicher für elektrische Energie, insbesondere einen Akkumulator, aufweist.

6. Nutzfahrzeuganhänger (1) nach einem der vorhergehenden Ansprüche,
**dadurch gekennzeichnet, dass**
die Versorgungs- und/oder Speichereinrichtung (6) in einem Staukasten (5), insbesondere Palettenkasten, angeordnet ist, der mit dem Fahrzeugrahmen (3) fest verbunden ist.

7. Nutzfahrzeuganhänger (1) nach einem der vorhergehenden Ansprüche,
**dadurch gekennzeichnet, dass**
der Nutzfahrzeuganhänger (1) als Sattelanhänger ausgebildet ist.

8. Verfahren zum Betreiben eines motorisierten Zugfahrzeugs für den Straßenverkehr, bei dem wenigstens einem Aggregat des Zugfahrzeugs Energie und/oder Betriebsmittel aus einer Versorgungs- und/oder Speichereinrichtung (6) zugeleitet wird, die unter einer Ladefläche an einem Fahrzeugrahmen (3) eines mit dem Zugfahrzeug gekoppelten Nutzfahrzeuganhängers (1) angebracht ist, wobei der Nutzfahrzeuganhänger (1) ein Fahrgestell (2) und einen Fahrzeugrahmen (3) aufweist, der mit dem Fahrgestell (2) verbunden ist und eine Ladefläche trägt, wobei
- der Fahrzeugrahmen (3) unterhalb der Ladefläche wenigstens eine Versorgungs- und/oder Speichereinrichtung (6) aufweist, die mit dem Zugfahrzeug verbindbar ist, um Energie und/oder Betriebsmittel wenigstens einem Aggregat des Zugfahrzeugs zuzuführen, wobei
- die Versorgungs- und/oder Speichereinrichtung (6) modular ausgebildet ist und eine werkseitig am Fahrzeugrahmen (3) fixierte Befestigungsvorrichtung aufweist, die zur Aufnahme unterschiedlicher Versorgungs- und/oder Speicherelemente ausgebildet ist, wobei
- die Versorgungs- und/oder Speichereinrichtung (6) zwischen zwei Längsträgern (12) des Fahrzeugrahmens (3) angeordnet ist, und wobei
- zur Verbindung der Versorgungs- und/oder Speicherelemente eine standardisierte Schnittstelle vorgesehen ist.

## Claims

1. A road vehicle train having a motorised tractor unit and a commercial vehicle trailer (1) having a chassis (2) and a vehicle frame (3), which is connected to the chassis (2) and bears a loading surface,
- the vehicle frame (3) having under the loading surface at least one supply and/or storage apparatus (6), which can be connected to a tractor unit in order to supply energy and/or operating fluids to at least one assembly of the tractor unit, wherein
- the supply and/or storage apparatus (6) is modular and has a fastening device, which is fixed to the vehicle frame (3) at the factory and is designed to receive different supply and/or storage elements, wherein
- the supply and/or storage apparatus (6) is arranged between two longitudinal beams (12) of the vehicle frame (3), wherein
- a standardised interface is provided to connect the supply and/or storage elements, and wherein
at least the supply and/or storage apparatus (6) that is used for operating an assembly of the traction unit is attached to a vehicle frame (3) of the commercial vehicle trailer (1) under the loading surface and is connected to the assembly of the traction unit.

2. . The commercial vehicle trailer (1) according to Claim 1,
**characterised in that**
the supply and/or storage apparatus (6) is arranged between the chassis (2) and a trailer coupling.

3. The commercial vehicle trailer (1) according to Claim 1 or 2,
**characterised in that**
the supply and/or storage apparatus (6) is arranged between the chassis (2) and a swan neck (9) that comprises a fifth wheel.

4. The commercial vehicle trailer (1) according to any one of the preceding claims,
**characterised in that**
the supply and/or storage apparatus (6) has a tank (14) for liquid or gaseous fuel.

5. The commercial vehicle trailer (1) according to any one of the preceding claims,
**characterised in that**
the supply and/or storage apparatus (6) has a store for electrical energy, in particular a battery.

6. The commercial vehicle trailer (1) according to any one of the preceding claims,
**characterised in that**
the supply and/or storage apparatus (6) is arranged in a stowage box (5), in particular pallet box, which is fixedly connected to the vehicle frame (3).

7. The commercial vehicle trailer (1) according to any one of the preceding claims,
**characterised in that**
the commercial vehicle trailer (1) is in the form of a semitrailer.

8. A method for operating a motorised tractor unit for road traffic, in which at least one assembly of the tractor unit is fed energy and/or operating fluids from a supply and/or storage apparatus (6) that is attached, under a loading surface, to a vehicle frame (3) of a commercial vehicle trailer (1) coupled to the tractor unit, wherein the commercial vehicle trailer (1) has a chassis (2) and a vehicle frame (3), which is connected to the chassis (2) and bears a loading surface,
- the vehicle frame (3) having under the loading surface at least one supply and/or storage apparatus (6), which can be connected to a tractor unit in order to supply energy and/or operating fluids to at least one assembly of the tractor unit, wherein
- the supply and/or storage apparatus (6) is modular and has a fastening device, which is fixed to the vehicle frame (3) at the factory and is designed to receive different supply and/or storage elements, wherein
- the supply and/or storage apparatus (6) is arranged between two longitudinal beams (12) of the vehicle frame (3), and wherein
- a standardised interface is provided to connect the supply and/or storage elements.

## Revendications

1. Train de véhicule routier avec un véhicule tracteur motorisé et une remorque de véhicule utilitaire (1) avec un châssis (2) et avec un cadre de véhicule (3) qui est relié au châssis (2) et porte une surface de chargement,
- le cadre de véhicule (3) comportant au moins un système d'alimentation et/ou d'accumulation (6) en dessous de la surface de chargement, qui peut être relié à un véhicule tracteur pour acheminer de l'énergie et/ou un moyen de fonctionnement au moins à un groupe du véhicule tracteur,
- le système d'alimentation et/ou d'accumulation (6) étant constitué de manière modulaire et comportant un dispositif de fixation fixé en usine sur le cadre de véhicule (3), qui est constitué pour loger différents éléments d'alimentation et/ou d'accumulation,
- le système d'alimentation et/ou d'accumulation (6) étant disposé entre deux longerons (12) du cadre de véhicule (3),
- une interface normalisée étant prévue pour liaison avec les éléments d'alimentation et/ou d'accumulation, et
au moins un système d'alimentation et/ou d'accumulation (6) utilisé pour le fonctionnement d'un groupe du véhicule tracteur étant monté sur un cadre de véhicule (3) de la remorque de véhicule utilitaire (1) en dessous de la surface de chargement et étant relié au groupe du véhicule tracteur.

2. Remorque de véhicule utilitaire (1) selon la revendication 1,
**caractérisée en ce que**
le système d'alimentation et/ou d'accumulation (6) est disposé entre le châssis (2) et un attelage de remorque.

3. Remorque de véhicule utilitaire (1) selon la revendication 1 ou 2,
**caractérisée en ce que**
le système d'alimentation et/ou d'accumulation (6) est disposé entre le châssis (2) et un col-de-cygne (9), qui comprend une sellette d'attelage.

4. Remorque de véhicule utilitaire (1) selon l'une quelconque des revendications précédentes,
**caractérisée en ce que**
le système d'alimentation et/ou d'accumulation (6) comporte un réservoir (14) pour du carburant liquide ou gazeux.

5. Remorque de véhicule utilitaire (1) selon l'une quelconque des revendications précédentes,
**caractérisée en ce que**
le système d'alimentation et/ou d'accumulation (6) comporte un accumulateur pour énergie électrique, notamment un accumulateur.

6. Remorque de véhicule utilitaire (1) selon l'une quelconque des revendications précédentes,
**caractérisée en ce que**
le système d'alimentation et/ou d'accumulation (6) est disposé dans une caisse de rangement (5), notamment une caisse-palette, qui est reliée fixement au cadre de véhicule (3).

7. Remorque de véhicule utilitaire (1) selon l'une quelconque des revendications précédentes,
**caractérisée en ce que**
la remorque de véhicule utilitaire (1) est constituée comme semi-remorque.

8. Procédé pour faire fonctionner un véhicule tracteur motorisé pour le trafic routier, pour lequel au moins de l'énergie et/ou un moyen de fonctionnement est acheminé à un groupe du véhicule tracteur à partir d'un système d'alimentation et/ou d'accumulation (6), qui est monté sous une surface de chargement sur un cadre de véhicule (3) d'une remorque de véhicule utilitaire (1) accouplé au véhicule tracteur, la remorque de véhicule utilitaire (1) comprenant un châssis (2) et un cadre de véhicule (3) qui est relié au châssis (2) et porte une surface de chargement,
- le cadre de véhicule (3) comportant au moins un système d'alimentation et/ou d'accumulation (6) en dessous de la surface de chargement, qui peut être relié à un véhicule tracteur pour acheminer de l'énergie et/ou un moyen de fonctionnement au moins à un groupe du véhicule tracteur,
- le système d'alimentation et/ou d'accumulation (6) étant constitué de manière modulaire et comportant un dispositif de fixation fixé en usine sur le cadre de véhicule (3), qui est constitué pour loger différents éléments d'alimentation et/ou d'accumulation,
- le système d'alimentation et/ou d'accumulation (6) étant disposé entre deux longerons (12) du cadre de véhicule (3),
- une interface normalisée étant prévue pour liaison avec les éléments d'alimentation et/ou d'accumulation.
